# EUROPEAN PATENT SPECIFICATION

(11) **EP 2 954 241 B1**
(45) Date of publication and mention of the grant of the patent: **11.04.2018**
(21) Application number: 14703089.4
(22) Date of filing: 07.02.2014
(51) Int. Cl.: F16K 27/00, F16L 15/00

(54) **TAMPERPROOF SCREWING COUPLING SYSTEM FOR VALVE OF A THERMAL/SANITARY PLANT FOR BUILDINGS**
SCHRAUBKUPPLUNGSSYSTEM MIT ORIGINALITÄTSSICHERUNG FÜR VENTIL EINER HEIZ-/SANITÄRANLAGE FÜR GEBÄUDE
SYSTÈME D'ACCOUPLEMENT PAR VISSAGE INVIOLABLE POUR SOUPAPE D'INSTALLATION THERMIQUE/SANITAIRE DE BÂTIMENTS

(30) Priority: 07.02.2013 IT MI20130172
(43) Date of publication of application: 16.12.2015
(73) Proprietor: Caleffi S.p.A., 28010 Fontaneto d'Agogna, Novara (IT)
(72) Inventor: CALEFFI, Marco, I-28010 Fontaneto d'Agogna (IT)
(74) Representative: Candito, Rocco
(86) International application number: PCT/EP2014/052436
(87) International publication number: WO 2014/122266

(56) References cited:
- EP-A2- 2 056 009
- WO-A2-2006/031386
- US-A- 3 069 187
- US-A- 5 746 454

## Description

### BACKGROUND OF THE INVENTION

The invention relates to a tamperproof screwing coupling system for a valve of a thermal/sanitary plant for buildings. The system according to the invention, in particular, may be provided on a safety valve or on an air venting valve of a heating plant, or a cooling plant. In particular, the system according to the invention is configured to prevent the accidental or intentional unscrewing of a cap element or a sleeve cap from a cup body or a glass body of the air venting valve or of the safety valve, respectively.

### STATE OF THE ART

The state-of-the-art air venting valves for heating plants currently known, for example, of the floating type, as described in EP1927802, comprise a hollow cup-shaped body having a lower connector for the connection to a pipe or a hydraulic equipment. Such valves further comprise superiorly a closing cap screwable on the cup body and having a housing seat for a mobile shutter operatively connected to a control float axially slidable in the cup body.

The closing cap is provided with a thread that is intended to engage with a respective further thread provided on the cup body.

Similarly, the safety valves for heating plants currently known in the state of the art comprise a cup- body to which a sleeve cap is screwed, suitable for housing a venting spring element calibrated to a determined pressure value. The sleeve cap is provided with a thread intended to engage with a respective further thread provided on the cup body.

A drawback of the above-described air venting valves is given by the possibility of loosening the clamping torque between the cap element and the cup body, especially in the case where the material of the cup element and/or of the cup body is a technopolymer. Of course, this involves considerable risks, particularly when high pressures of the fluid are reached in the heating plant. Furthermore, there is still the risk that an incautious user may unscrew the cap from the cup body, thus exposing him/herself to high risks for his/her own safety.
A similar problem is found in the above-mentioned safety valves, in which the sleeve cap risks to be unscrewed from the cup element.
The above-mentioned problem is caused by the deformation of the sealing threads, due to the continuous cycles of pressure and temperature change. Measures aimed to solve such a problem, such as, for example to provide a glue or an adhesive between the threads of the cap and the threads of the cup body are troublesome, expensive, and also not very efficient.

**A joint for plastic pipes, with toothed locking device, is known from** EP2056009**.** This joint comprises two parts mutually couplable through screwing, moreover these parts are suitable to house a valve such as a check valve insert. This document corresponds to the preamble of claim 1.

### OBJECTS OF THE INVENTION

An object of the invention is to improve the known air venting and safety valves. Another object of the invention is to provide a tamperproof screwing coupling system that makes a valve for thermal/sanitary plant safer and more reliable.

Another object of the invention is to provide a tamperproof screwing coupling system that prevents an unscrewing operation of a cap from the cup element of a valve for a thermal/sanitary plant for buildings.

### BRIEF DESCRIPTION OF THE INVENTION

The above-mentioned objects are achieved by a tamperproof screwing coupling system for a valve of a thermal/sanitary plant for buildings according to claim 1.

### BRIEF DESCRIPTION OF THE DRAWINGS

The invention can be better understood and implemented with reference to the attached drawings, that show embodiments thereof by way of non-limiting example, in which:
Figs. 1 and 2 are perspective views of an air venting valve provided with a first version of a tamperproof screwing coupling system according to the invention;
Fig. 2A is an enlarged detail of Fig. 2, schematically showing the operation of the tamperproof screwing coupling system according to the invention;
Fig. 3 shows a cap element of the air venting valve of Fig. 1, in which a part of the tamperproof screwing coupling system of the invention is incorporated;
Fig. 3A is an enlarged detail of Fig. 3;
Fig. 4 shows a cup element of the air venting valve of Fig. 1, in which another part of the tamperproof screwing coupling system of the invention is incorporated;
Fig. 4A is an enlarged detail of Fig. 4;
Fig. 5 shows an air venting valve provided with a second version of the tamperproof screwing coupling system according to the invention;
Fig. 5A is an enlarged detail of Fig. 5, schematically showing the operation of the tamperproof screwing coupling system according to the invention;
Fig. 6 shows the cap element of the air venting valve of Fig. 5, in which a part of the second version of the tamperproof screwing coupling system is incorporated;
Fig. 6A is an enlarged detail of Fig. 6;
Fig. 7 shows the cup element of the air venting valve of Fig. 5, in which another part of the second version of the tamperproof screwing coupling plant of the invention is incorporated;
Fig. 7A is an enlarged detail of Fig. 7;
Fig. 8 shows a safety valve provided with a third version of the tamperproof screwing coupling system according to the invention;
Fig. 8A is an enlarged detail of Fig. 8;
Fig. 9 shows a sleeve cap of the safety valve of Fig. 8, in which a part of the third version of the tamperproof screwing coupling system is incorporated;
Fig. 9A is an enlarged detail of Fig. 9;
Fig. 10 shows the cup element of the safety valve of Fig. 8, in which another part of the third version of the tamperproof screwing coupling system of the invention is incorporated;
Figs. 11 and 12 show a safety valve provided with a fourth version of the tamperproof screwing coupling system according to the invention;
Fig. 12A is an enlarged detail of Fig. 12, schematically showing the operation of the fourth version of the tamperproof screwing coupling system;
Fig. 13 shows the sleeve cap of the safety valve of Fig. 11, in which a first part of the fourth version of the tamperproof screwing coupling system is incorporated;
Fig. 13A is an enlarged detail of Fig. 13;
Fig. 14 shows the cup body of the safety valve of Fig. 8, in which a second part of the fourth version of the tamperproof screwing coupling system is incorporated;
Fig. 14A is an enlarged detail of Fig. 14.

### DETAILED DESCRIPTION OF THE INVENTION

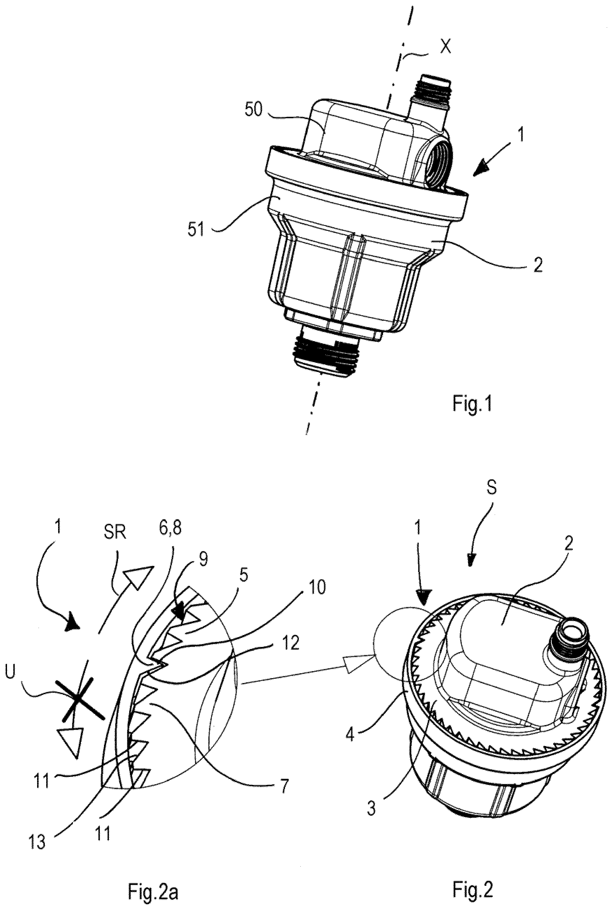

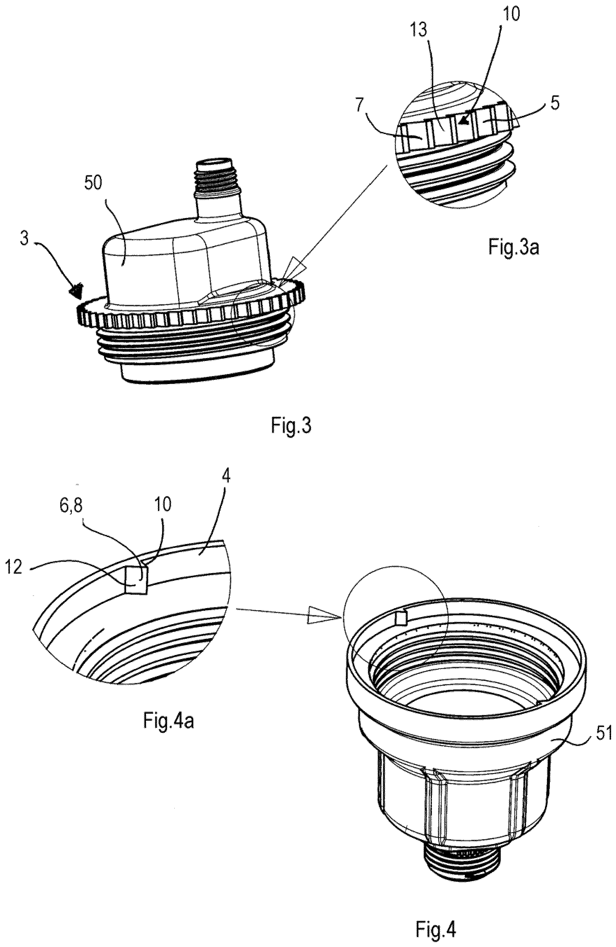

With reference to the Figs. 1 to 4, an air venting valve 2 provided with a first version of tamperproof screwing coupling system 1 according to the invention is described. The air venting valve 2 has the function of automatically eliminating, i.e., without the need to manually intervene, the air that builds up in the thermal hydraulic circuits, allowing preventing negative phenomena such as the occurrence of corrosive processes due to oxygen, air pockets localized in the heating bodies, cavitation phenomena in the circulation pumps.

The tamperproof screwing coupling system 1 generally comprises a first threaded connecting part 3 and a second threaded connecting part 4, mutually couplable through screwing by relative rotation of the first part 3 with respect to the second connecting part 4 around an axis X. In this specific case, the first part 3 is part of a cap element 50 of the valve 2, while the second part 4 is part of a cup body 51 of the valve 2.

The cap element 50, closing the cup body 51, comprises internally a housing seat for a mobile shutter operatively connected to a control float axially slidable in the cup body 51.

The cap element 50 and/or the cup body 51 in particular are made of a technopolymer.

As it shall be noticed from the following description, the screwing coupling system 1 performs the function of preventing a relative unscrewing of the first connecting part 3 and of the second connecting part 4, i.e., it is a safety unscrewing-proof coupling system.

The system 1 comprises locking means 5 and 6 provided on the first connecting part 3 and on the second connecting part 4, in this case on the cap element 50 and on the cup element 51, respectively, the locking means 5 and 6 being configured to allow the mutual screwing of the first 3 and of the second 4 connecting parts in a screwing direction Sr to a clamping configuration S. The locking means 5 and 6 are further configured for locking therebetween the first connecting part 3 and the second connecting part 4 in the above-mentioned clamping configuration S, preventing a relative unscrewing movement thereof.

According to this first version of the system 1, the locking means 5 and 6 comprises a notched circular portion 7 provided on the first connecting part 3, in this case on the cap element 50. The notched circular portion 7 has a profile extending around the axis X according to a plane orthogonal to the latter one. The notched circular portion 7 has a serrated profile comprising tooth-shaped protrusions defining a plurality of recess zones 9. The tooth-shaped protrusions extend along respective directions that are substantially orthogonal to the axis X. In other terms, the tooth-shaped projecting zones of the notched circular portion 7 project parallel to a transversally arranged plane, in particular orthogonally, to the axis X.

The locking means 6 of the first version of the tamperproof screwing coupling system 1 further comprises, on the second connecting part 4, i.e., on the cup body 51, a stop protruding portion 8 so shaped as to couple with the above-described recess zones 9. The stop protruding portion 8, facing inwardly of the valve 2, projects from an inner surface of a cylindrical wall of the cup body 61 according to a transversal direction, in particular orthogonal to the axis X.

The stop protruding portion 8 and the tooth-shaped zones of the notched circular portion 7 are suitably oriented, taking into account the screwing direction of the two parts 3 and 4, and therefore they are configured to allow a relative rotation in the screwing direction towards the clamping configuration S and to prevent an opposite relative rotation that tends to mutually unscrew the two parts, as indicated by the reference U.

In particular, the stop protruding portion 8 comprises a locking surface 10 shaped so as to restingly receive further locking surfaces 11 of the notched circular portion 7 to prevent a rotation in the unscrewing direction U.

The locking surface 10 and the further locking surfaces 11 are oriented according to respective radial planes passing through the axis X.

The stop protruding portion 8 comprises a sliding surface 12 that is inclined with respect to the locking surface 10, while the notched circular portion 7 comprises further sliding surfaces 13 that are inclined with respect to the further locking surfaces 11. The further sliding surfaces 13 are suitable for sliding on the sliding surface 12 to allow the screwing rotation Sr of the cap element 50 with respect to the cup element 51. This is possible by virtue of a certain elasticity of the zone in which the stop protruding portion 8 is provided.

In the example described above, as it has been noticed, the notched circular portion 7 is obtained on the cap element 51, while the stop protruding portion 8 is obtained on the cup body 51. However, in a variant, it is possible to invert the position thereof, providing the stop protruding portion 8 on the cap element 51 and the notched circular portion 7 on the cup body 51.

The operation of the coupling system 1 is described herein below. During a screwing step of the cap element 50 on the cup body 51, the notched circular portion 7 progressively axially reaches the stop protruding portion 8 until touching it and sliding thereupon. This is made possible by the particular configuration of the sliding surface 12 and of the further sliding surfaces 13, suitably oriented to allow the relative rotation between the cap element 50 and the cup body 51 univocally in a direction, indicated by Sr. When the cap element 50 reaches a suitable clamping configuration S on the cup body 51, the locking surface 10 restingly receives one of the further locking surfaces 13, preventing the cap element 50 from rotating to the unscrewing direction U. In other terms, in the screwing step, in particular before the inner abutment between the cap element 50 and the cup body 51, an unscrewing-proof joint is established therebetween, by virtue of the projecting zones of the notched circular portion 7 and the stop protruding portion 8, that act as mutually cooperating hooking and sealing teeth. Therefore, in the clamping configuration S, a robust coupling between the first part 3 and the second part is obtained, the unscrewing being prevented, except for breakages of the locking means, which would thus indicate a tampering of the product.

The locking means 5 and 6 of the system 1 act as ratchet safety means, allowing a rotation of the cap element 50 with respect to the cup body 51 only in the screwing direction.

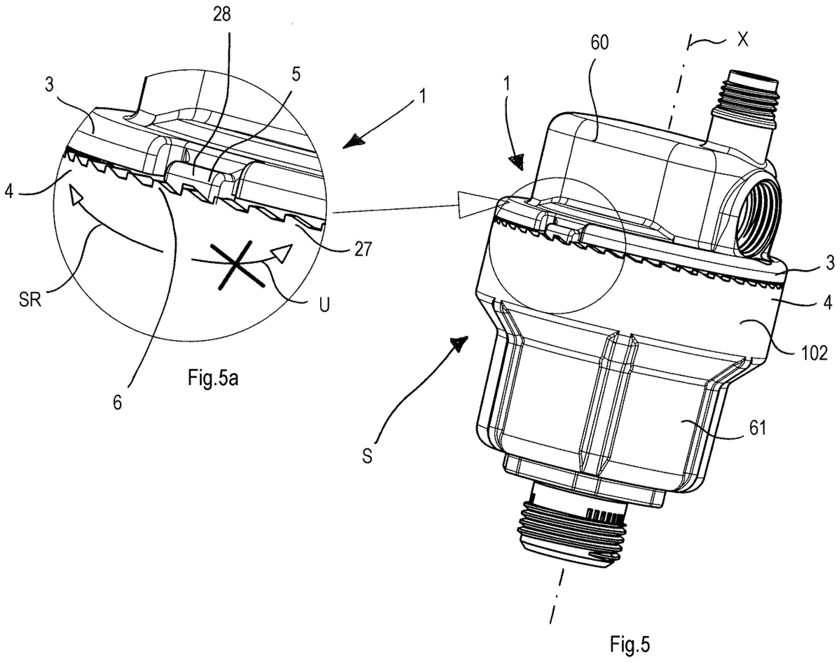

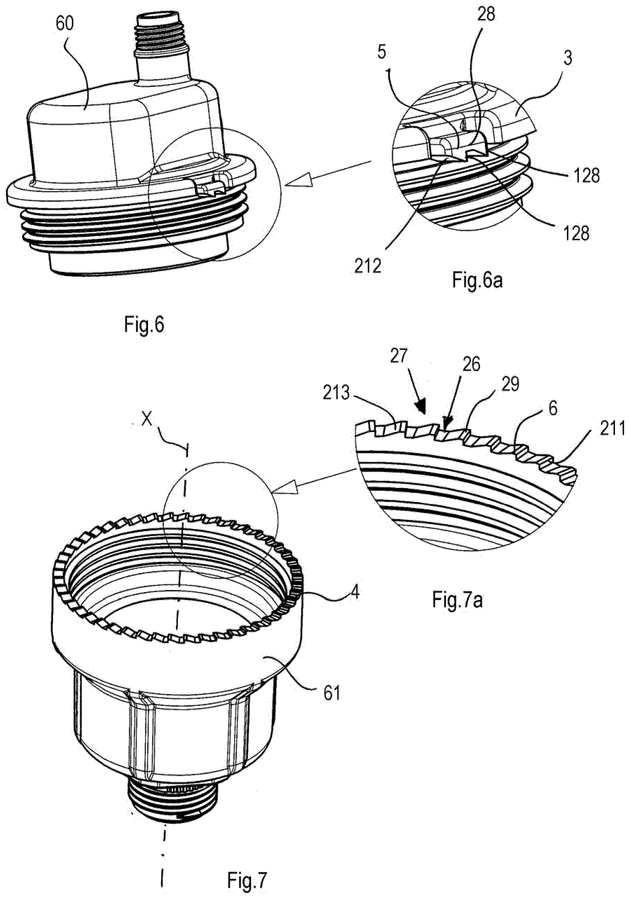

Figs. 5 to 7A show a venting valve 102 similar to the one just described above, but provided with a second version of the tamperproof screwing coupling system 1 according to the invention.

In this version also, the locking means comprises a notched circular portion 27, but, unlike the first version of the system 1, it comprises projecting zones projecting according to longitudinal planes parallel to the axis X, in particular they project substantially axially parallel to the axis X, and which are provided on the cup body 61 of the air venting valve 102. The notched circular portion 27 extends around the axis X and comprises relief zones 29 projecting from a plane orthogonal to the axis X.

The locking means 5 comprise a stop protruding portion 28 so shaped as to couple with groove zones 26 defined in the notched circular portion 27.

The stop protruding portion 28 is obtained in a cantilever manner on an edge zone of the first connecting part 3, i.e., on the cap element 60, and it is configured to elastically flex substantially in an axial direction, parallel to the axis X, to allow the rotation in the screwing direction Sr towards the clamping configuration S.

The stop protruding portion 28 comprises, by way of exemplary, non-limiting example, two locking surfaces 128 so shaped as to restingly receive further locking surfaces 211 provided on the notched circular portion 27 to prevent a rotation of the cap element 60 in the unscrewing direction U. The two locking surfaces 128 and the further locking surfaces 211 are oriented according to respective radial planes passing through the axis X.

The stop protruding portion 28 comprises two sliding surfaces 212 inclined with respect to the two respective locking surfaces 128. The notched circular portion 27 comprises further sliding surfaces 213 inclined with respect to the respective further locking surfaces 211 and suitable for slidably receiving the sliding surfaces 212 of the stop protruding portion 28 to allow the screwing rotation Sr of the cap element 60 with respect to the cup body 61.

In the example described above, as it has been noticed, the notched circular portion 27 is obtained on the cup body 61, while the stop protruding portion 28 is obtained on the cap element 60. However, in a variant, it is possible to invert the position thereof, providing the stop protruding portion 28 on the cup body 61 and the notched circular portion 27 on the cap element 60.

What has described above for the operation of the first version of coupling system 1 applies mutatis mutandis also to the second version of the system 1 just described.

Two different versions of the safety valve are now described, which are provided with the tamperproof screwing coupling system 1 implemented according to two different possible embodiments.

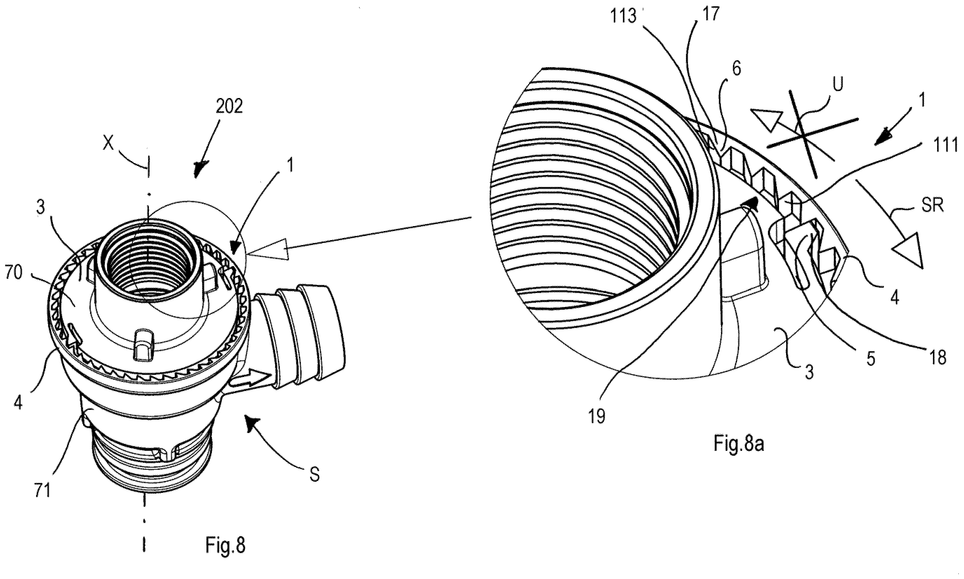

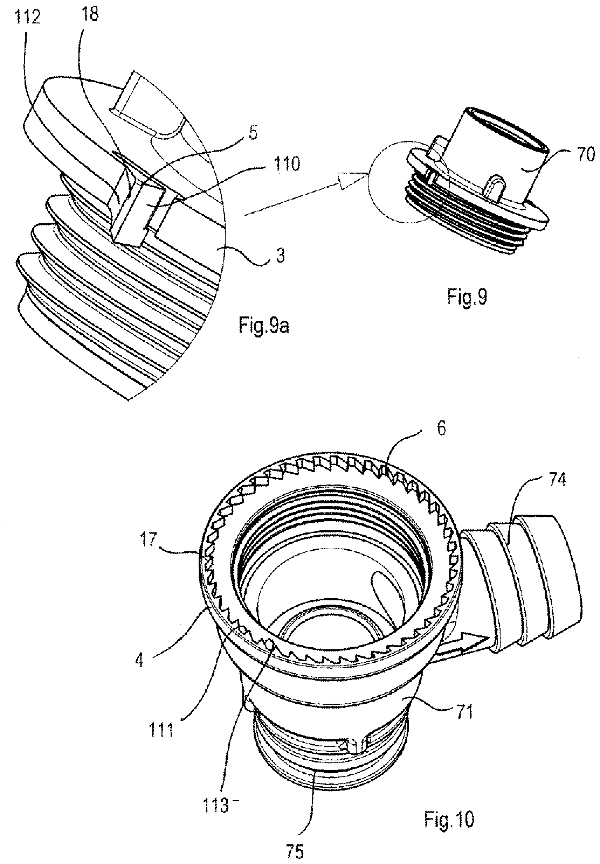

With reference to the Figs. 8 to 10, a safety valve 202 is shown, provided with a third version of the tamperproof screwing coupling system 1 according to the invention. The safety valve 202 comprises a cup body 71 provided with connections 74 and 75 for the connection to a pipe of a plant, and a sleeve cap 70 that is threaded and hollow to house therein a venting spring member calibrated to a given pressure value which is found in predetermined operative conditions. The function of the safety valve 202 is to control the pressure in plants, such as hydraulic or heating plants, etc. Upon reaching a desired calibration pressure, the safety valve 202 intervenes, by opening and releasing the overpressure to the atmosphere, thus preventing the plant from reaching dangerous pressure limits.

In this version, the locking means 5 and 6 comprises a notched circular portion 17 the profile of which extends around the axis X according to a plane orthogonal to the axis X, and a stop protruding portion 18 so shaped as to couple with recess zones 19 obtained in the notched circular portion 17. The relief zones of the notched circular portion 17 and the stop protruding portion 18 extend along directions that are oriented orthogonally to the axis X.

The stop protruding portion 18 comprises a locking surface 110 so shaped as to rest on further locking surfaces 111 of the notched circular portion 17 to prevent a relative rotation of the sleeve cap 70 with respect to the cup body 71 in the unscrewing direction U.

The above-mentioned locking surface 110 and the further locking surfaces 111 are oriented according to respective radial planes passing through the axis X.

The stop protruding portion 18 comprises a sliding surface 112 inclined with respect to the locking surface 110, while the notched circular portion 17 comprises further sliding surfaces 113 inclined with respect to the respective further locking surfaces 111. The further sliding surfaces 113 are oriented to allow a sliding thereupon of the sliding surface 112 only in the screwing direction Sr. The stop protruding portion 18 is obtained in a cantilever manner on an edge zone of the sleeve cap 70, and it is configured to elastically flex substantially radially towards the axis X to allow the rotation in the screwing direction Sr towards the clamping configuration S.

In a variant, it is possible to provide the notched circular portion 17 on the sleeve cap 70, and the stop protruding portion 18 on the cup body 71.

The operation of this version of the system 1 is similar to what has described above for the operation of the first and the second versions of the coupling system 1.

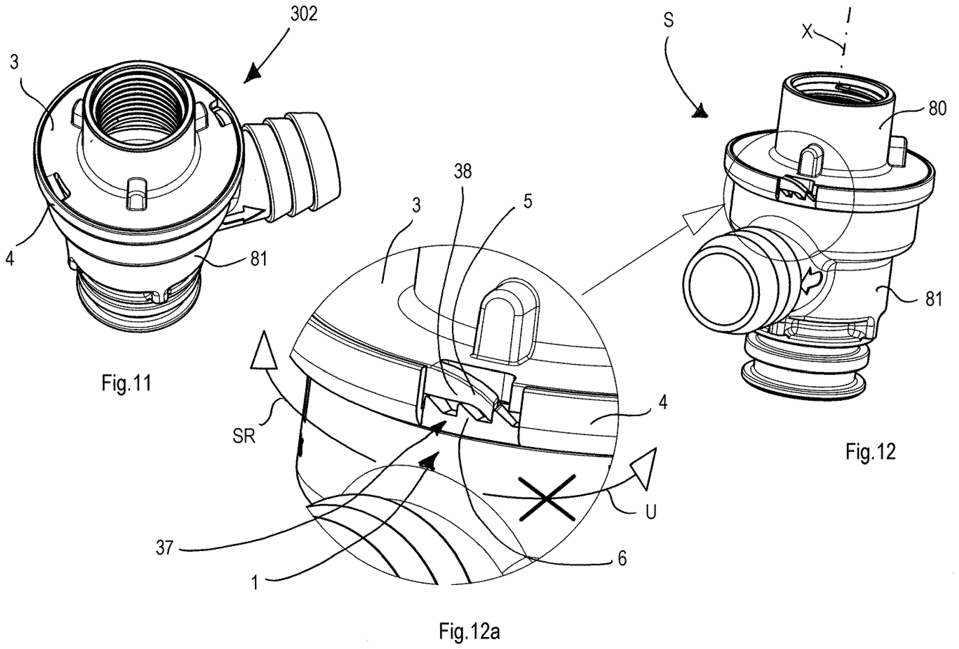

Figs. 11 to 14 show a safety valve 302 similar to the one just described, but provided with a fourth version of the tamperproof screwing coupling system 1 according to the invention, partially similar to the second version of the coupling system 1 described with reference to the Figs. 5 to 7.

In this version, the locking means 6 includes a notched circular portion 37 comprising relief zones 39 projecting according to longitudinal planes parallel to the axis X, in particular, they project substantially axially parallel to the axis X and are provided on the cup body 81 of the safety valve 302. The notched circular portion 37 extends around the axis X, and the relief zones 39 project from a plane orthogonal to the axis X.

The locking means 5 comprise a stop protruding portion 38 so shaped as to couple with groove zones 36 defined in the notched circular portion 37.

The stop protruding portion 38 is obtained in a cantilever manner on an edge zone of the sleeve cap 80, and it is configured to elastically flex substantially in an axial direction, parallel to the axis X, to allow the rotation in the screwing direction Sr towards the clamping configuration S.

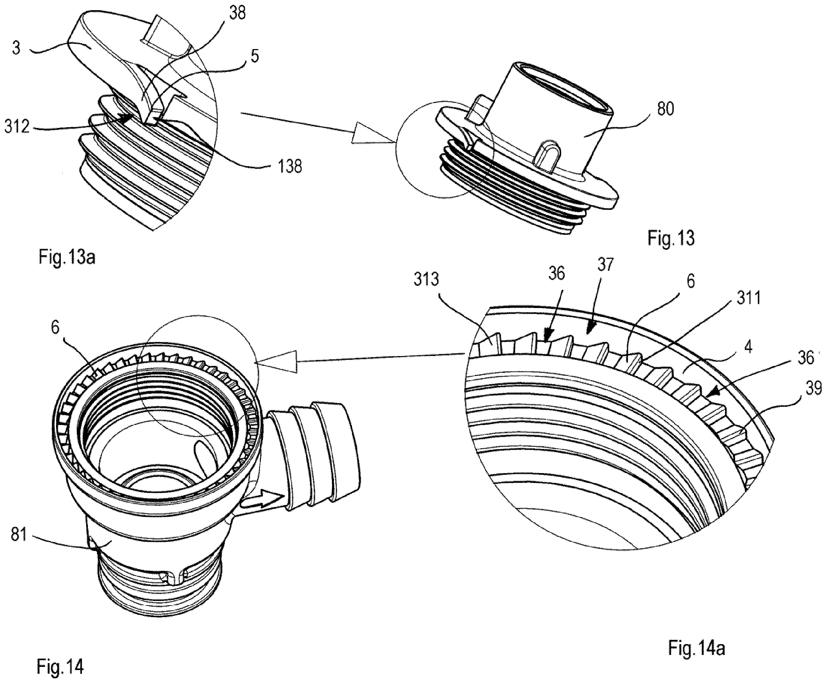

The stop protruding portion 38 comprises a locking surface 138 (best shown in Fig. 13A), so shaped as to rest onto further locking surfaces 311 of the notched circular portion 37 to prevent a rotation of the sleeve cap 80 in the unscrewing direction S.

The locking surface 138 and the further locking surfaces 311 are oriented according to respective radial planes passing through the axis X.

The stop protruding portion 38 comprises a sliding surface 312 that is inclined with respect to the locking surface 138, while the notched circular portion 37 comprises further sliding surfaces 313 inclined with respect to the respective further locking surfaces 311. The sliding surface 312 is suitable for sliding along the further sliding surfaces 313 in the screwing step.

The operation principle of this version of the system 1 is similar to the previous versions described.

In a possible variant, it is possible to invert the position of the locking means, providing the stop protruding portion 38 on the cup body 81 and the notched circular portion 37 on the sleeve cap 80.

The tamperproof screwing coupling system 1 may also be applied to further types of valves, not only the safety valves or the air venting valves having the above-described configurations.

From what has been described above, it follows that all the versions of a tamperproof screwing coupling system for a valve described above have in common some characteristics as explained herein below. In all the versions, the locking means 5 and 6 comprises a notched circular portion (7; 17; 27; 37, respectively) extending around the axis X, and one or more stop protruding portions (8; 18; 28; 38, respectively) so shaped as to be coupled with the respective notched circular portion (7; 17; 27; 37).

An important feature, shared by all the versions described above, is to be pointed out. In all the versions, each stop protruding portion (8; 18; 28; 38) is configured so as not to project outwardly with respect to the first part 3 and the second part 4 in the clamping configuration S. In other terms, when the first connecting part 3 and the second connecting part 4 are mutually coupled in the coupled clamping configuration S, each stop protruding portion 8, 18, 28, 38 is contained in the volume defined by an outer surface of the valve, particularly by a surface defined by the coupling of the two parts 3 and 4. In other terms, in the clamping configuration S, there are no zones of the stop protruding portions 8, 18, 28, 38 projecting outwardly. In equivalent terms, the surfaces of the stop protruding portions 8, 18, 28, 38 are innermost located with respect to the outer surfaces of the first part 3 and the second part 4 in the clamping configuration S. The exposed surfaces of the stop protruding portions 8, 18, 28, 38 are recessed, or at most flush with the outer surfaces of the connecting parts 3 and 4.

This involves that, in the clamping configuration S, each stop protruding portion 8, 18, 28, 38 is hardly reachable or even inaccessible for a user. By virtue of such configuration, any possible accidental or intentional action from the outside is prevented, on the stop protruding portion, thereby preventing the undesired mutual unscrewing of the two parts 3 and 4. Therefore, a tampering of the system is more efficiently prevented.

A further important feature shared by all the versions described above is to be pointed out. In all the versions, the first connecting part 3 and the second connecting part 4 are configured so that, in the clamping configuration S, each stop protruding portion 8; 18; 28; 38 is visible from outside. The visibility from outside of the stop protruding portions 8; 18; 28; 38, particularly when the two parts 3 and 4 are mutually coupled, advantageously provides a clear indication of a possible occurred tampering. In other terms, even when the two parts 3 and 4 are in a mutually coupled configuration, i.e., in an operative configuration, it is possible to visually inspect from the outside in a simple and immediate manner, and to verify the possible tampering of a valve. If an anomaly, damage, failed integrity, breakage, or even the absence of a stop protruding portion 8; 18; 28; 38 are noticed, the indication is immediately given, that an opening of the valve is occurred or attempted. Therefore, the coupling system also performs a tampering indication function. In other terms, the locking means 5 and 6 also act as tampering indicating means, providing information that may be useful in several circumstances or for different aims.

From what has been indicated above, it shall be apparent that the coupling system 1 according to the invention is efficient and reliable, while being constructively simple and inexpensive to be manufactured.

In particular, by virtue of the system 1 according to the invention, it is possible to obtain a safer and more reliable air venting valve, or safety valve for a plant, such as a heating plant, a hydraulic/sanitary plant, a cooling plant, etc.

Owing to the system 1 according to the invention, it is possible to prevent accidental or intentional loosening or unscrewing operations of the cap from the cup element of a valve, thus preserving the safety of an individual who may imprudently attempt to break the valve, and thereby making the respective plant safer.

Furthermore, the system allows obviating the clamping loosening problem due to temperature and pressure changes, which subject the material to continuous stresses.

What has been stated and shown with reference to the attached drawings was given by way of mere exemplary, illustrative example of the general characteristics of the invention, as well as of some preferred embodiments thereof; therefore, other modifications and variations are possible, without for this departing from the scope of the claims.

It is possible to shape and size the coupling system 1 in the desired manner as a function of the particular applications and as a function of the type and geometry of valve in which it is desired to incorporate the system 1. Finally, the used materials may be selected according to the needs, provided that they are suitable for the specific use for which they are intended.

## Claims

1. Tamperproof screwing coupling system for valve (2; 102; 202; 302) of a thermal/sanitary plant for buildings, comprising:
- a first connecting part (3) and a second connecting part (4) that are mutually couplable through screwing by relative rotation of said first connecting part (3) with respect to said second connecting part (4) around an axis (X),
- locking means (5, 6) provided on said first part (3) and on said second connecting part (4), arranged to allow said first connecting part (3) and said second connecting part (4) to be mutually screwed to a clamping configuration (S), and configured to mutually lock said first connecting part (3) and said second connecting part (4) in said clamping configuration (S), preventing a relative unscrewing movement thereof, said locking means (5, 6) comprising a notched circular portion (7; 17; 27; 37) extending around said axis (X) and one or more stop protruding portions (8; 18; 28; 38) shaped for coupling with said notched circular portion (7; 17; 27; 37), wherein said one or more stop protruding portions (8; 18; 28; 38) are configured so as not to project outwardly with respect to said first part (3) and said second part (4) in said clamping configuration (S),
**characterised in that** said first connecting part (3) and said second connecting part (4) are configured so that, in said clamping configuration (S), said stop protruding portions (8; 18; 28; 38) are visible from outside for providing indication of a possible tampering.

2. Tamperproof screwing coupling system according to claim 1, wherein said locking means (5, 6) substantially project along directions that are orthogonal with respect to said axis (X).

3. Tamperproof screwing coupling system according to claim 2, wherein said locking means (5, 6) comprise a notched circular portion (7; 17) the profile of which extends around said axis (X) according to a plane that is orthogonal to said axis (X).

4. Tamperproof screwing coupling system according to claim 3, wherein said locking means (6) comprise a stop protruding portion (8; 18) shaped for coupling with recess zones (9; 19) defined by said notched circular portion (7; 17).

5. Tamperproof screwing coupling system according to claim 4, wherein said stop protruding portion (8; 18) comprises a locking surface (10; 110) shaped for restingly receiving further locking surfaces (11; 111) of said notched circular portion (7; 17) to prevent a relative rotation of said first part (3) and of said second connecting part (4) in an unscrewing direction (U).

6. Tamperproof screwing coupling system according to claim 5, wherein said locking surface (10; 110) and said further locking surfaces (11; 111) are oriented according to respective radial planes passing through said axis (X).

7. Tamperproof screwing coupling system according to claim 5 or 6, wherein said stop protruding portion (8; 18) comprises a sliding surface (12; 112) inclined with respect to said locking surface (10; 110), and said notched circular portion (7; 17) comprises further sliding surfaces (13; 113) inclined with respect to said further locking surfaces (11; 111) and suitable for sliding on said sliding surface (12; 112) to allow a screwing rotation (Sr) of said first part (3) with respect to said second connecting part (4).

8. Tamperproof screwing coupling system according to any one of claims 4 to 7, wherein said notched circular portion (7) is obtained on said first connecting part (3), and said stop protruding portion (8) is provided on said second connecting part (4).

9. Tamperproof screwing coupling system according to any one of claims 4 to 7, wherein said notched circular portion (17) is obtained on said second connecting part (4), and said stop protruding portion (18) is provided on said first connecting part (3).

10. Tamperproof screwing coupling system according to claim 9, wherein said stop protruding portion (18) is obtained in a cantilever manner on an edge zone of said first connecting part (3), and is configured to flex elastically substantially radially towards said axis (X) to allow rotation in the screwing direction (Sr) towards said clamping configuration (S).

11. Tamperproof screwing coupling system according to claim 1, wherein said locking means (5, 6) comprises zones that project substantially axially parallel to said axis (X).

12. Tamperproof screwing coupling system according to claim 1 or 11, wherein said locking means (5, 6) projects along longitudinal planes parallel to said axis (X).

13. Tamperproof screwing coupling system according to claim 11 or 12, wherein said locking means (5, 6) comprises a notched circular portion (27; 37) extending around said axis (X) and having raised zones (29; 39) that project from a plane which is orthogonal to said axis (X).

14. Tamperproof screwing coupling system according to any one of claims 11 to 13, wherein said locking means (5, 6) comprises a stop protruding portion (28; 38) shaped to couple with groove zones (26; 36) defined by said notched circular portion (27; 37).

15. Tamperproof screwing coupling system according to claim 14, wherein said stop protruding portion (28; 38) comprises one or more locking surfaces (128; 138) shaped for restingly receiving further locking surfaces (211; 311) of said notched circular portion (27; 37) to prevent a relative rotation of said first part (3) and said second connecting part (4) in an unscrewing direction (U).

16. Tamperproof screwing coupling system according to claim 15, wherein said one or more locking surfaces (128; 138) and said further locking surfaces (211; 311) are oriented according to respective radial planes passing through said axis (X).

17. Tamperproof screwing coupling system according to claim 15 or 16, wherein said stop protruding portion (28; 38) comprises one or more sliding surfaces (212; 312) inclined with respect to said one or more locking surfaces (128; 138), and said notched circular portion (27; 37) comprises further sliding surfaces (213; 313) that are inclined with respect to said further locking surfaces (211; 311) and are suitable for sliding on said one or more sliding surfaces (212; 312) to allow a screwing rotation (Sr) of said first part (3) with respect to said second connecting part (4).

18. Tamperproof screwing coupling system according to any one of claims 11 to 17, wherein said stop protruding portion (28; 38) is provided on said first connecting part (3) and said notched circular portion (27; 37) is obtained on said second connecting part (4).

19. Tamperproof screwing coupling system according to any one of claims 14 to 18, wherein said stop protruding portion (28; 38) is obtained in a cantilever manner on an edge zone of said first connecting part (3), and is configured to flex elastically substantially in a plane parallel to said axis (X) to allow the rotation of said first connecting part (3) only in the screwing direction (Sr) towards said clamping configuration (S).

20. Air venting valve for a thermal plant of a building, comprising a tamperproof screwing coupling system according to any preceding claim, wherein said first threaded connecting part (3) is included in a cap element (50; 60) of said valve (2; 102), and said second threaded connecting part (4) is included in a cup- body (51; 61) of said valve (2; 102).

21. Safety valve for a thermal plant of a building, comprising a tamperproof screwing coupling system according to any one of claims 1 to 19, wherein said first threaded connecting part (3) is included in a sleeve cap (70; 80) of said valve (202; 302), and said second threaded connecting part (4) is included in a cup- body (71; 81) of said valve (202; 302).

## Patentansprüche

1. Schraubkupplungssystem mit Missbrauchssicherung für Ventil (2; 102; 202; 302) einer Heiz-/Sanitäranlage für Gebäude umfassend:
- ein erstes Verbindungsteil (3) und ein zweites Verbindungsteil (4), die durch Verschrauben miteinander koppelbar sind durch relative Drehung des ersten Verbindungsteils (3) bezüglich des zweiten Verbindungsteils (4) um eine Achse (X),
- Verriegelungsmittel (5, 6), die auf dem ersten Teil (3) und auf dem zweiten Verbindungsteil (4) bereitgestellt und angeordnet sind, um es dem ersten Verbindungsteil (3) und dem zweiten Verbindungsteil (4) zu erlauben, miteinander zu einer Klemmkonfiguration (S) verschraubt zu werden, und eingerichtet, um das erste Verbindungsteil (3) und das zweite zweiten Verbindungsteil (4) in der Klemmkonfiguration (S) miteinander zu verriegeln und dabei eine relative Losschraubbewegung dieser zu verhindern, wobei die Verriegelungsmittel (5, 6) einen gekerbten Kreisbereich (7; 17; 27; 37), der sich um die Achse (X) erstreckt, und einen oder mehrere Anschlaghervorstehbereiche (8; 18; 28; 38), die zum Koppeln mit dem gekerbten Kreisbereich (7; 17; 27; 37) gebildet sind, umfassen,
wobei die einen oder mehreren Anschlaghervorstehbereiche (8; 18; 28; 38), derart eingerichtet sind, dass sie bezüglich des ersten Teils (3) und des zweiten Teils (4) in der Klemmkonfiguration (S) nicht nach außen hervorstehen,
**dadurch gekennzeichnet, dass** das erste Verbindungsteil (3) und das zweite Verbindungsteil (4) derart eingerichtet sind, dass in der Klemmkonfiguration (S) die Anschlaghervorstehbereiche (8; 18; 28; 38) von außen sichtbar sind, um Hinweise auf einen möglichen Missbrauch bereitzustellen.

2. Schraubkupplungssystem mit Missbrauchssicherung nach Anspruch 1, wobei die Verriegelungsmittel (5, 6) im Wesentlichen entlang Richtungen hervorspringen, die orthogonal bezüglich der Achse (X) sind.

3. Schraubkupplungssystem mit Missbrauchssicherung nach Anspruch 2, wobei das Verriegelungsmittel (5, 6) einen gekerbten Kreisbereich (7; 17) umfasst, dessen Profil sich um die Achse (X) gemäß einer Ebene erstreckt, die orthogonal zu der Achse (X) ist.

4. Schraubkupplungssystem mit Missbrauchssicherung nach Anspruch 3, wobei die Verriegelungsmittel (6) einen Anschlaghervorstehbereich (8; 18) umfassen, der zur Kopplung mit Aussparungszonen (9; 19), die von dem gekerbten Kreisbereich (7; 17) definiert wird, gebildet ist.

5. Schraubkupplungssystem mit Missbrauchssicherung nach Anspruch 4, wobei der Anschlaghervorstehbereich (8; 18) eine Verriegelungsfläche (10; 110) umfasst, die gebildet ist, um weitere Verriegelungsflächen (11; 111) des gekerbten Kreisbereichs (7; 17) ruhend aufzunehmen, um eine relative Drehung des ersten Teils (3) und des zweiten Verbindungsteils (4) in einer Losschraubrichtung (U) zu verhindern.

6. Schraubkupplungssystem mit Missbrauchssicherung nach Anspruch 5, wobei die Verriegelungsfläche (10; 110) und die weiteren Verriegelungsflächen (11; 111) gemäß jeweiliger radialer Ebenen, die durch die Achse (X) verlaufen, orientiert sind.

7. Schraubkupplungssystem mit Missbrauchssicherung nach Anspruch 5 oder 6, wobei der Anschlaghervorstehbereich (8; 18) eine Gleitfläche (12; 112) umfasst, die bezüglich der Verriegelungsfläche (10; 110) geneigt ist, und der gekerbte Kreisbereich (7; 17) weitere Gleitflächen (13; 113) umfasst, die bezüglich der weiteren Verriegelungsflächen (11; 111) geneigt und zum Gleiten auf der Gleitfläche (12; 112) geeignet sind, um eine Schraubdrehung (Sr) des ersten Teils (3) bezüglich des zweiten Verbindungsteils (4) zu erlauben.

8. Schraubkupplungssystem mit Missbrauchssicherung nach einem der Ansprüche 4 bis 7, wobei der gekerbte Kreisbereich (7) auf dem ersten Verbindungsteil (3) erhalten wird, und der Anschlaghervorstehbereich (8) auf dem zweiten Verbindungsteil (4) bereitgestellt ist.

9. Schraubkupplungssystem mit Missbrauchssicherung nach einem der Ansprüche 4 bis 7, wobei der gekerbte Kreisbereich (17) auf dem zweiten Verbindungsteil (4) erhalten wird, und der Anschlaghervorstehbereich (18) auf dem ersten Verbindungsteil (3) bereitgestellt ist.

10. Schraubkupplungssystem mit Missbrauchssicherung nach Anspruch 9, wobei der Anschlaghervorstehbereich (18) in einer Auskragungsweise auf einer Kantenzone des ersten Verbindungsteils (3) erhalten wird, und eingerichtet ist, um sich im Wesentlichen radial hin zu der Achse (X) elastisch zu verbiegen, um Drehungen in der Schraubrichtung (Sr) hin zu der Klemmkonfiguration (S) zu erlauben.

11. Schraubkupplungssystem mit Missbrauchssicherung nach Anspruch 1, wobei das Verriegelungsmittel (5, 6) Zonen umfasst, die im Wesentlichen axial parallel zu der Achse (X) hervorspringen.

12. Schraubkupplungssystem mit Missbrauchssicherung nach Anspruch 1 oder 11, wobei das Verriegelungsmittel (5, 6) entlang Längsebenen hervorspringt, die parallel zu der Achse (X) sind.

13. Schraubkupplungssystem mit Missbrauchssicherung nach Anspruch 11 oder 12, wobei das Verriegelungsmittel (5, 6) einen gekerbten Kreisbereich (27; 37) umfasst, der sich um die Achse (X) erstreckt und angehobene Zonen (29; 39) aufweist, die von einer Ebene hervorspringen, die orthogonal zu der Achse (X) ist.

14. Schraubkupplungssystem mit Missbrauchssicherung nach einem der Ansprüche 11 bis 13, wobei das Verriegelungsmittel (5, 6) einen Anschlaghervorstehbereich (28; 38) umfasst, der gebildet ist, um mit Nutzonen (26; 36) zu koppeln, die von dem gekerbten Kreisbereich (27; 37) definiert werden.

15. Schraubkupplungssystem mit Missbrauchssicherung nach Anspruch 14, wobei der Anschlaghervorstehbereich (28; 38) eine oder mehrere Verriegelungsflächen (128; 138) umfasst, die gebildet ist, um weitere Verriegelungsflächen (211; 311) des gekerbten Kreisbereichs (27; 37) ruhend aufzunehmen, um eine relative Drehung des ersten Teils (3) und des zweiten Verbindungsteils (4) in einer Losschraubrichtung (U) zu verhindern.

16. Schraubkupplungssystem mit Missbrauchssicherung nach Anspruch 15, wobei die einen oder mehreren Verriegelungsflächen (128; 138) und die weiteren Verriegelungsflächen (211; 311) gemäß jeweiliger radialer Ebenen, die durch die Achse (X) verlaufen, orientiert sind.

17. Schraubkupplungssystem mit Missbrauchssicherung nach Anspruch 15 oder 16, wobei der Anschlaghervorstehbereich (28; 38) eine oder mehrere Gleitflächen (212; 312) umfasst, die bezüglich der einen oder mehreren Verriegelungsflächen (128; 138) geneigt sind, und der gekerbte Kreisbereich (27; 37) weitere Gleitflächen (213; 313) umfasst, die bezüglich der weiteren Verriegelungsflächen (211; 311) geneigt und zum Gleiten auf den einen oder mehreren Gleitflächen (212; 312) geeignet sind, um eine Schraubdrehung (Sr) des ersten Teils (3) bezüglich des zweiten Verbindungsteils (4) zu erlauben.

18. Schraubkupplungssystem mit Missbrauchssicherung nach einem der Ansprüche 11 bis 17, wobei der Anschlaghervorstehbereich (28; 38) auf dem ersten Verbindungsteil (3) bereitgestellt ist, und der gekerbte Kreisbereich (27; 37) auf dem zweiten Verbindungsteil (4) erhalten wird.

19. Schraubkupplungssystem mit Missbrauchssicherung nach einem der Ansprüche 14 bis 18, wobei der Anschlaghervorstehbereich (28; 38) in einer Auskragungsweise auf einer Kantenzone des ersten Verbindungsteils (3) erhalten wird, und eingerichtet ist, um sich im Wesentlichen in einer zu der Achse (X) parallelen Ebene elastisch zu verbiegen, um die Drehung des ersten Verbindungsteils (3) lediglich in der Schraubrichtung (Sr) hin zu der Klemmkonfiguration (S) zu erlauben.

20. Entlüftungsventil für eine Heizanlage eines Gebäudes, umfassend ein Schraubkupplungssystem mit Missbrauchssicherung nach einem vorstehenden Anspruch, wobei das erste Gewindeverbindungsteil (3) in einem Kappenelement (50; 60) des Ventils (2; 102) enthalten ist, und das zweite Gewindeverbindungsteil (4) in einem Tassenkörper (51; 61) des Ventils (2; 102) enthalten ist.

21. Sicherheitsventil für eine Heizanlage eines Gebäudes, umfassend ein Schraubkupplungssystem mit Missbrauchssicherung nach einem der Ansprüche 1 bis 19, wobei das erste Gewindeverbindungsteil (3) in einer Muffenkappe (70; 80) des Ventils (202; 302) enthalten ist, und das zweite Gewindeverbindungsteil (4) in einem Tassenkörper (71; 81) des Ventils (202; 302) enthalten ist.

## Revendications

1. Système d'accouplement par vissage inviolable pour soupape (2 ; 102 ; 202 ; 302) d'une installation thermique/sanitaire pour des bâtiments, comprenant :
- une première partie de raccordement (3) et une seconde partie de raccordement (4) qui peuvent mutuellement être accouplées par l'intermédiaire d'un vissage par rotation relative de ladite première partie de raccordement (3) par rapport à ladite seconde partie de raccordement (4) autour d'un axe (X),
- des moyens de verrouillage (5, 6) prévus sur ladite première partie (3) et sur ladite seconde partie de raccordement (4), agencés pour permettre à ladite première partie de raccordement (3) et ladite seconde partie de raccordement (4) d'être vissées mutuellement suivant une configuration de serrage (S), et configurés pour verrouiller mutuellement ladite première partie de raccordement (3) et ladite seconde partie de raccordement (4) dans ladite configuration de serrage (S), empêchant un mouvement de dévissage relatif de celles-ci, lesdits moyens de verrouillage (5, 6) comprenant une portion circulaire entaillée (7 ; 17 ; 27 ; 37) s'étendant autour dudit axe (X) et une ou plusieurs portions en saillie d'arrêt (8 ; 18 ; 28 ; 38) formées pour l'accouplement avec ladite portion circulaire entaillée (7 ; 17 ; 27 ; 37),
dans lequel ladite une ou plusieurs portions en saillie d'arrêt (8 ; 18 ; 28 ; 38) sont configurées de sorte à ne pas faire saillie vers l'extérieur par rapport à ladite première partie (3) et ladite seconde partie (4) dans ladite configuration de serrage (S),
**caractérisé en ce que** ladite première partie de raccordement (3) et ladite seconde partie de raccordement (4) sont configurées de sorte que, dans ladite configuration de serrage (S), lesdites portions en saillie d'arrêt (8 ; 18 ; 28 ; 38) soient visibles de l'extérieur pour fournir une indication d'une possible altération.

2. Système d'accouplement par vissage inviolable selon la revendication 1, dans lequel lesdits moyens de verrouillage (5, 6) font saillie sensiblement le long de directions qui sont orthogonales par rapport audit axe (X).

3. Système d'accouplement par vissage inviolable selon la revendication 2, dans lequel lesdits moyens de verrouillage (5, 6) comprennent une portion circulaire entaillée (7 ; 17) dont le profil s'étend autour dudit axe (X) selon un plan qui est orthogonal audit axe (X).

4. Système d'accouplement par vissage inviolable selon la revendication 3, dans lequel lesdits moyens de verrouillage (6) comprennent une portion en saillie d'arrêt (8 ; 18) formée pour le couplage avec des zones d'évidement (9 ; 19) définies par ladite portion circulaire entaillée (7 ; 17).

5. Système d'accouplement par vissage inviolable selon la revendication 4, dans lequel ladite portion en saillie d'arrêt (8 ; 18) comprend une surface de verrouillage (10 ; 110) formée pour la réception par repos d'autres surfaces de verrouillage (11 ; 111) de ladite portion circulaire entaillée (7 ; 17) pour empêcher une rotation relative de ladite première partie (3) et de ladite seconde partie de raccordement (4) dans une direction de dévissage (U).

6. Système d'accouplement par vissage inviolable selon la revendication 5, dans lequel ladite surface de verrouillage (10 ; 110) et lesdites autres surfaces de verrouillage (11 ; 111) sont orientées selon des plans radiaux respectifs passant au travers dudit axe (X).

7. Système d'accouplement par vissage inviolable selon la revendication 5 ou 6, dans lequel ladite portion en saillie d'arrêt (8; 18) comprend une surface coulissante (12; 112) inclinée par rapport à ladite surface de verrouillage (10 ; 110), et ladite portion circulaire entaillée (7 ; 17) comprend d'autres surfaces coulissantes (13 ; 113) inclinées par rapport auxdites autres surfaces de verrouillage (11 ; 111) et adaptées pour coulisser sur ladite surface coulissante (12 ; 112) pour permettre une rotation de vissage (Sr) de ladite première partie (3) par rapport à ladite seconde partie de raccordement (4).

8. Système d'accouplement par vissage inviolable selon l'une quelconque des revendications 4 à 7, dans lequel ladite portion circulaire entaillée (7) est obtenue sur ladite première partie de raccordement (3), et ladite portion en saillie d'arrêt (8) est prévue sur ladite seconde partie de raccordement (4).

9. Système d'accouplement par vissage inviolable selon l'une quelconque des revendications 4 à 7, dans lequel ladite portion circulaire entaillée (17) est obtenue sur ladite seconde partie de raccordement (4), et ladite portion en saillie d'arrêt (18) est prévue sur ladite première partie de raccordement (3).

10. Système d'accouplement par vissage inviolable selon la revendication 9, dans lequel ladite portion en saillie d'arrêt (18) est obtenue en porte-à-faux sur une zone d'arête de ladite première partie de raccordement (3), et est configurée pour fléchir élastiquement sensiblement radialement vers ledit axe (X) pour permettre la rotation dans la direction de vissage (Sr) vers ladite configuration de serrage (S).

11. Système d'accouplement par vissage inviolable selon la revendication 1, dans lequel ledit moyen de verrouillage (5, 6) comprend des zones qui font saillie sensiblement axialement parallèle audit axe (X).

12. Système d'accouplement par vissage inviolable selon la revendication 1 ou 11, dans lequel ledit moyen de verrouillage (5, 6) fait saillie le long de plans longitudinaux parallèles audit axe (X).

13. Système d'accouplement par vissage inviolable selon la revendication 11 ou 12, dans lequel ledit moyen de verrouillage (5, 6) comprend une portion circulaire entaillée (27 ; 37) s'étendant autour dudit axe (X) et présentant des zones relevées (29 ; 39) qui font saillie d'un plan qui est orthogonal audit axe (X).

14. Système d'accouplement par vissage inviolable selon l'une quelconque des revendications 11 à 13, dans lequel ledit moyen de verrouillage (5, 6) comprend une portion en saillie d'arrêt (28 ; 38) formée pour s'accoupler avec des zones de rainure (26 ; 36) définies par ladite portion circulaire entaillée (27 ; 37).

15. Système d'accouplement par vissage inviolable selon la revendication 14, dans lequel ladite portion en saillie d'arrêt (28 ; 38) comprend une ou plusieurs surfaces de verrouillage (128 ; 138) formées pour la réception par repos d'autres surfaces de verrouillage (211 ; 311) de ladite portion circulaire entaillée (27 ; 37) pour empêcher une rotation relative de ladite première partie (3) et ladite seconde partie de raccordement (4) dans une direction de dévissage (U).

16. Système d'accouplement par vissage inviolable selon la revendication 15, dans lequel ladite une ou plusieurs surfaces de verrouillage (128 ; 138) et lesdites autres surfaces de verrouillage (211 ; 311) sont orientées selon des plans radiaux respectifs passant au travers dudit axe (X).

17. Système d'accouplement par vissage inviolable selon la revendication 15 ou 16, dans lequel ladite portion en saillie d'arrêt (28 ; 38) comprend une ou plusieurs surfaces coulissantes (212 ; 312) inclinées par rapport à ladite une ou plusieurs surfaces de verrouillage (128 ; 138), et ladite portion circulaire entaillée (27 ; 37) comprend d'autres surfaces coulissantes (213 ; 313) qui sont inclinées par rapport auxdites autres surfaces de verrouillage (211; 311) et sont adaptées pour coulisser sur ladite une ou plusieurs surfaces coulissantes (212 ; 312) pour permettre une rotation de vissage (Sr) de ladite première partie (3) par rapport à ladite seconde partie de raccordement (4).

18. Système d'accouplement par vissage inviolable selon l'une quelconque des revendications 11 à 17, dans lequel ladite portion en saillie d'arrêt (28 ; 38) est prévue sur ladite première partie de raccordement (3) et ladite portion circulaire entaillée (27 ; 37) est obtenue sur ladite seconde partie de raccordement (4).

19. Système d'accouplement par vissage inviolable selon l'une quelconque des revendications 14 à 18, dans lequel ladite portion en saillie d'arrêt (28 ; 38) est obtenue en porte-à-faux sur une zone d'arête de ladite première partie de raccordement (3), et est configurée pour fléchir élastiquement sensiblement dans un plan parallèle audit axe (X) pour permettre la rotation de ladite première partie de raccordement (3) seulement dans la direction de vissage (Sr) vers ladite configuration de serrage (S).

20. Soupape de ventilation d'air pour une installation thermique d'un bâtiment, comprenant un système d'accouplement par vissage inviolable selon l'une quelconque des revendications précédentes, dans laquelle ladite première partie de raccordement (3) filetée est incluse dans un élément de capuchon (50; 60) de ladite soupape (2 ; 102), et ladite seconde partie de raccordement (4) filetée est incluse dans un corps en forme de coupe (51 ; 61) de ladite soupape (2 ; 102).

21. Soupape de sécurité pour une installation thermique d'un bâtiment, comprenant un système d'accouplement par vissage inviolable selon l'une quelconque des revendications 1 à 19, dans laquelle ladite première partie de raccordement (3) filetée est incluse dans un capuchon de manchon (70; 80) de ladite soupape (202 ; 302), et ladite seconde partie de raccordement (4) filetée est incluse dans un corps en forme de coupe (71 ; 81) de ladite soupape (202 ; 302).
